# FASCICULE DE BREVET EUROPEEN

(11) **EP 0 489 654 B1**
(45) Date de publication et mention de la délivrance du brevet: **06.03.1996**
(21) Numéro de dépôt: 91403279.2
(22) Date de dépôt: 04.12.1991
(51) Int. Cl.: H01H 25/00, H01H 11/00, B60Q 1/14

(54) **Ensemble de commutation pour véhicules automobiles**
Schalteranordnung für ein Kraftfahrzeug
Switch assembly for a motor vehicle

(30) Priorité: 05.12.1990 FR 9015228
(43) Date de publication de la demande: 10.06.1992
(73) Titulaire: JAEGER, F-92303 Levallois-Perret (FR)
(72) Inventeur: Rollet, Gérard, F-95240 Cormeilles en Parisis (FR); Gauthier, Christian, F-75005 (FR)
(74) Mandataire: Martin, Jean-Jacques

(56) Documents cités:
- EP-A- 0 161 567
- EP-A- 0 252 800
- EP-A- 0 292 607
- DE-C- 3 039 832
- DE-U- 7 504 242
- FR-A- 2 021 098

## Description

La présente invention concerne un ensemble de commutation électrique pour véhicule automobile.

De nombreux commutateurs électriques pour véhicules automobiles, notamment pour la commande des fonctions éclairages et/ou lave/essuie-vitres ou glaces ont déjà été proposés.

Le document EP-A-161567 décrit un ensemble de commutation électrique conçu pour être fixé sur la colonne de direction d'un véhicule automobile, dans lequel les contacts électriques de sortie d'au moins un commutateur électrique sont solidaires d'une platine qui porte au moins un organe électrique auxiliaire et au moins un connecteur apte à connecter le commutateur électrique et l'organe électrique auxiliaire avec le circuit électrique du véhicule.

La présente invention a pour but de perfectionner les dispositifs de commutation connus.

Ce but est atteint selon la présente invention grâce à un ensemble de commutation électrique du type défini en revendication 1 annexée.

Selon une caractéristique avantageuse de la présente invention la platine comprend au moins un réseau de lames en matériau électriquement conducteur, sur lequel est surmoulé un corps en matériau électriquement isolant.

Selon une autre caractéristique avantageuse de la présente invention, la platine comprend deux réseaux de lames en matériau électriquement conducteur, disposés sur deux étages généralement parallèles, sur lesquels est surmoulé un corps en matériau électriquement isolant.

Selon une autre caractéristique avantageuse de la présente invention, les organes électriques auxiliaires portés par la platine sont choisis dans le groupe comprenant : des relais, des fusibles, et un bloc contact piloté par exemple directement ou indirectement par une clef.

D'autres caractéristiques, buts et avantages de la présente invention apparaîtront à la lecture de la description détaillée qui va suivre et en regard des dessins annexés donnés à titre d'exemple non limitatif et sur lesquels :
- la figure 1 représente une vue en perspective d'un ensemble de commutation conforme à la présente invention,
- la figure 2 représente une vue schématique en perspective de réseaux de lamelles électriquement conductrices, avant surmoulage, destinées à former une platine conforme à la présente invention,
- la figure 3 représente une vue schématique éclatée et en perspective d'un ensemble de commutation conforme à la présente invention,
- la figure 4 représente une vue en plan d'un élément de boîtier portant des lamelles de contact venues de la platine conforme à la présente invention,
- la figure 5 représente une autre vue en plan d'un élément de boîtier portant des lamelles de contact venues de la platine conforme à la présente invention,
- la figure 6 représente une vue schématique en coupe longitudinale d'une manette de commande conforme à la présente invention, et
- la figure 7 représente une vue en coupe transversale, selon le plan de coupe référencé VII-VII sur la figure 6, de la même manette.

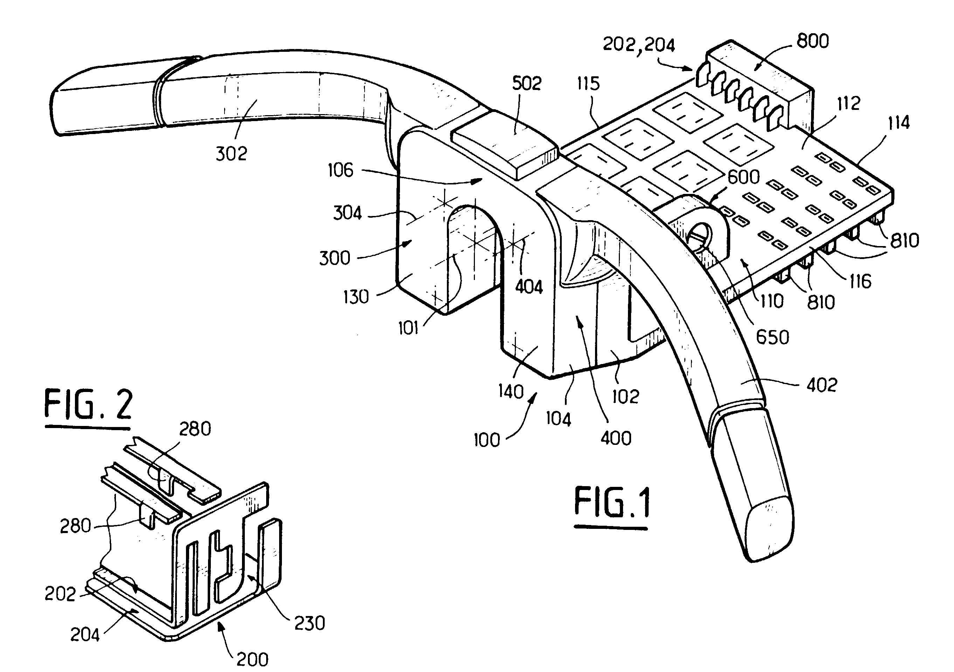

L'ensemble de commutation représenté sur la figure 1 annexée, qui correspond à un mode de réalisation préférentiel, mais non limitatif de la présente invention est conçu pour être fixé sur la colonne de direction d'un véhicule automobile et est destiné à commander notamment les fonctions éclairages, essuie/lave-vitres et glaces du véhicule.

L'ensemble de commutation représenté sur la figure 1 comprend un boîtier 100, en forme générale d'arche, logeant deux commutateurs principaux 300, 400, commandés par des manettes respectives 302, 402. Le boîtier 100 peut être formé, de façon connue en soi, de plusieurs coquilles, telles que par exemple deux coquilles 102, 104, assemblées par tout moyen classique approprié, tel que par encliquetage, vissage, rivetage, ou collage. L'une des coquilles 102 est prolongée par une platine 110. Cette platine 110 est solidaire de la coquille 102. Plus précisément, selon la présente invention, la coquille 102 et la platine 110 sont de préférence formées d'une pièce unique réalisée par moulage de matière plastique.

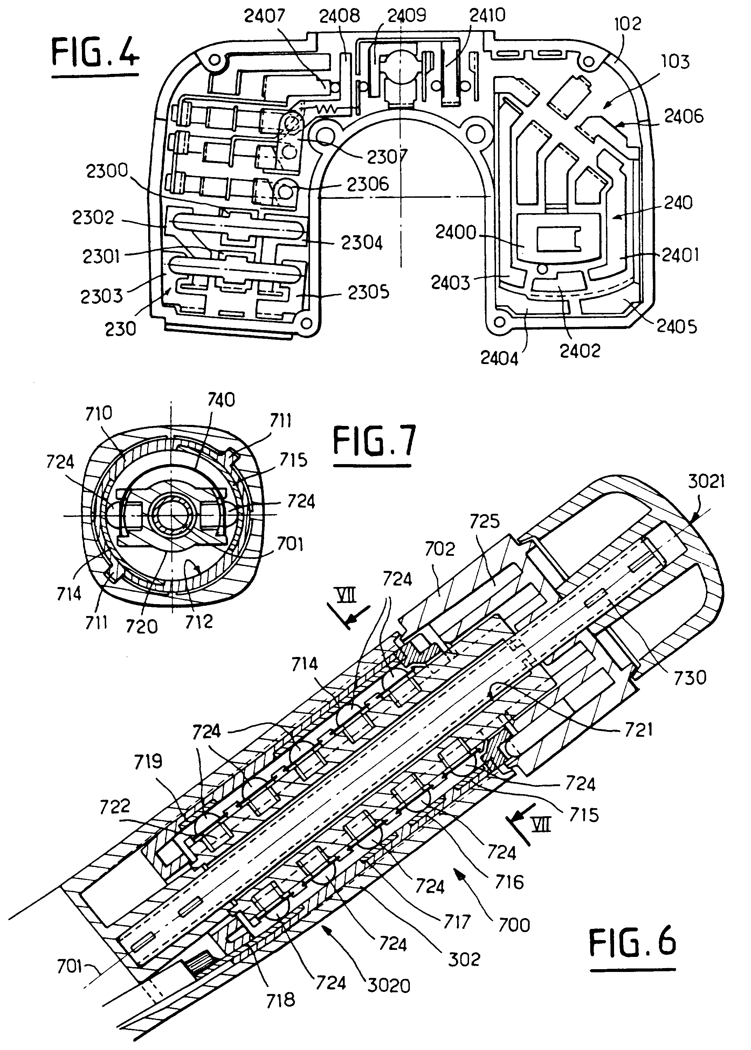

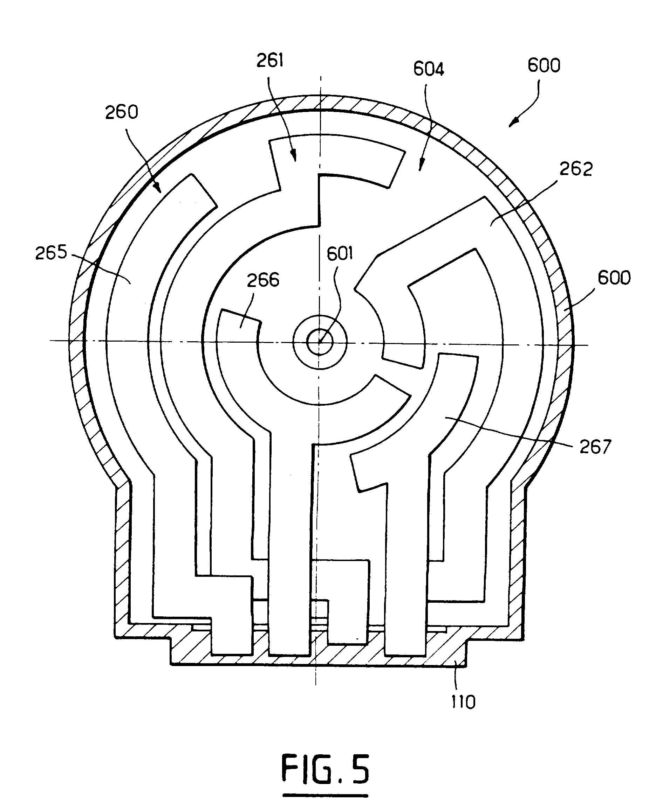

Comme indiqué précédemment, la platine 110 porte les éléments de contact de sortie des commutateurs 300, 400. Ces contacts de sortie des commutateurs 300, 400, sont visibles par exemple sur la figure 4 sous les références 230, 240.

Par ailleurs, la platine 110 porte au moins un organe électrique auxiliaire et un connecteur 800.

Plus précisément encore selon la représentation donnée sur la figure 1, les organes électriques auxiliaires comprennent des fusibles 810, un bloc contact 600 piloté par une clef et des relais. Ces derniers n'ont pas été représentés sur la figure 1 pour simplifier l'illustration.

La platine 110 en plus des contacts électriques de sortie des commutateurs 300, 400, qui sont référencés 230 et 240 sur la figure 4, porte des éléments de contact additionnels. Ces éléments de contact additionnels comprennent des premiers éléments conçus pour être reliés aux fusibles 810, des seconds éléments 260, visibles sur la figure 5, intégrés au bloc contact 600 et des troisièmes éléments de contact conçus pour être reliés aux relais. Certains au moins de ces éléments de contact aboutissent au connecteur 800 de sorte que celui-ci assure les connections appropriées entre les commutateurs électriques 300, 400, les fusibles, les relais, le bloc contact et le circuit électrique du véhicule.

Selon une caractéristique avantageuse de la présente invention, la platine 110 est réalisée par surmoulage d'un corps 112 en matériau thermoplastique sur au moins un réseau de lames en matériau électriquement conducteur. Plus précisément encore, de préférence la platine 110 est réalisée par surmoulage d'un corps 112 en matériau thermoplastique sur deux réseaux 202, 204, de lames en matériau électriquement conducteur. Ces deux réseaux 202, 204 sont visibles sur la figure 2.

Le matériau thermoplastique utilisé pour former la platine 110, venue de moulage avec la coquille 102 de boîtier peut faire l'objet d'un grand nombre de variantes. Selon un mode de réalisation préférentiel mais non limitatif, il peut s'agir de polyamide 6.6. Celui-ci peut le cas échéant être chargé de fibres de verre.

Les réseaux de lames 202, 204 sur lesquels sont surmoulés le corps 112 et la coquille de boîtier 102 sont de préférence formés en cuivre ou laiton. Les lames 202, 204 ont typiquement une épaisseur de l'ordre de 8/10 de mm.

Bien entendu une coopération est nécessaire entre les lames 202, 204 et les organes de commutation des commutateurs 300, 400, au niveau des sorties 230, 240 ; entre les lames 202, 204 et les organes de commutation du bloc de contact 600 au niveau des sorties 260 ; entre les lames 202, 204 et les fusibles 810 ainsi que les relais ; enfin les lames 202, 204 doivent être accessibles au niveau du connecteur 800.

Pour cela, le corps surmoulé 112 ne doit pas envelopper totalement les lames de contact 202, 204, mais laisser les extrémités de celles-ci accessibles au niveau du boîtier 102, du bloc de contact 600, des emplacements de relais, des emplacements de fusibles 810 et du connecteur 800. Le corps du connecteur 800 peut lui-même être venu de moulage avec la coquille 102 et la platine 110.

Comme indiqué précédemment, l'ensemble de commutation représenté sur la figure 1 est conçu pour être placé sur la colonne de direction d'un véhicule automobile. Le boîtier 100 a la forme générale d'une arche centrée sur un axe 101. Cet axe est de préférence parallèle, à l'utilisation, à l'axe de la colonne de direction. Les deux branches 130, 140, du boîtier 100 qui logent respectivement les deux commutateurs principaux 300, 400 sont placés de part et d'autre de l'axe 101. L'âme 106 qui relie les deux branches 130, 140 est superposée à la colonne de direction. Cette âme 106 s'étend ainsi dans une direction générale horizontale.

La platine 110 est de préférence plane et solidaire de la base des branches de la coquille 102 du boîtier. Ainsi, la platine 110 s'étend dans une direction générale parallèle à l'axe 101. Selon la représentation de la figure 1, la platine 110 a son bord libre arrière 114 (c'est-à-dire le bord opposé à la coquille 102), généralement horizontal. Ainsi, les bords libres longitudinaux 115, 116 de la platine sont généralement parallèles à l'axe 101 de la colonne de direction.

Cependant en variante on peut envisager de placer la platine 110 verticalement, cette platine restant de préférence parallèle à l'axe 101.

Les deux manettes 302, 402 sont symétriques par rapport à un plan vertical passant par l'axe 101 de la colonne de direction.

De préférence, comme cela sera précisé par la suite les deux manettes 302, 402 sont conçues pour pouvoir pivoter chacune dans deux plans différents, orthogonaux entre eux : autour d'un premier axe 304, 404 généralement parallèle à l'axe 101 de la colonne de direction, et autour d'un deuxième axe 306, 406, orthogonal à l'axe 101 de la colonne de direction et généralement parallèle au plan moyen du volant.

Selon une autre caractéristique avantageuse de la présente invention les lames 202, 204 intégrées à la platine 110 font l'objet de différents pliages.

Ces lames 202, 204 sont de préférence réalisées, de façon connue en soi de l'homme de l'art, par découpe d'un réseau de lames, dénommé généralement "araignée", dans une plaque plane de cuivre ou laiton. A ce stade, les différentes lames composant un réseau 202, 204, ou "araignée", sont reliées entre elles par des pontets provisoires sécables, à leurs extrémités. Le ou les réseau(x) 202, 204 ainsi formé(s) est (sont) plié(s), comme cela sera précisé par la suite, puis placé(s) dans un moule pour la réalisation, d'une pièce unique, de la coquille 102 de boîtier, du corps 112 de platine, d'un corps 602 de bloc de contact 600 et du corps de connecteur 800.

Selon le mode de réalisation préférentiel mais non limitatif représenté sur les figures annexées, les extrémités 230, 240 des lames 202, 204, qui forment les sorties des commutateurs 300, 400 font l'objet d'un premier pliage, sensiblement à 90° de la platine 110. Ainsi, ces extrémités 230, 240 orthogonales à la platine 110, qui sont accessibles sur la face interne de la coquille 102 s'étendent perpendiculairement à l'axe 101 de la colonne de direction pour coopérer avec les éléments de commutation des commutateurs 300, 400.

Les extrémités 260 des lames 202, 204 au niveau du bloc de contact 600 font de préférence l'objet d'un deuxième pliage à 90° de la platine 110 comme illustré schématiquement sur la figure 5. Ces extrémités 260 sont accessibles sur la face interne 604 de la coquille 602, venue de moulage avec la platine 110.

On aperçoit sur la figure 5 une première série d'extrémités 261, 262 de lames appartenant au premier réseau, supérieur, 202, et une deuxième série d'extrémités 265, 266 et 267 de lames appartenant au second réseau inférieur 204. La première série d'extrémités 261, 262 et la seconde série d'extrémités 265, 266 et 267 sont placées dans deux plans parallèles différents, tout deux orthogonaux à la platine 110.

Ces deux séries d'extrémités comprennent chacune des secteurs de couronne centrés sur un axe commun 601. Cet axe est parallèle à la platine 110. Selon la figure 1, l'axe 601 est perpendiculaire à l'axe 101 de la colonne de direction. En variante, l'axe 601 pourrait être parallèle à l'axe 101 de la colonne de direction.

Le bloc de contact 600 comprend par ailleurs un rotor 650 guidé à rotation autour de l'axe 601 sur le boîtier du bloc de contact 600. Ce rotor 650 est conçu pour être entraîné à rotation autour de l'axe 601, directement ou indirectement par la clef de contact du véhicule. Ce rotor comprend au moins deux palettes de contact aptes à relier des groupes différents d'extrémités 261, 262 et 265, 266 et 267, des lames, en fonction de sa position angulaire autour de l'axe 601. Le rotor 650 équipé des palettes de contact n'a pas été représenté en détail sur les figures annexées pour simplifier l'illustration. Dans le cas où un seul étage de réseaux de lames est prévu dans la platine 110, le bloc de contact 600 comprendra de préférence une seule série d'extrémités coplanaires, orthogonales à l'axe 601.

Le bloc de contact 600 est conçu pour commander la mise sous tension du démarreur, les divers accessoires du véhicule, tels que l'auto-radio et le réseau de bord, de façon connue en soi.

La géométrie des extrémités 261, 262, 265, 266 et 267 peut faire l'objet de nombreuses variantes de réalisation. Pour cette raison, cette géométrie ne sera pas décrite plus en détail par la suite.

De préférence, comme cela est schématisé sur la figure 2, les réseaux de lames 202, 204 font l'objet de troisièmes pliages au niveau de lamelles 280, comme représenté schématiquement sur la figure 2. Ces lamelles 280, disposées perpendiculairement à la platine 110 après pliage sont conçues pour être reliées, de préférence par embrochage, avec les fusibles 810 et/ou relais associés.

Enfin, les lames 202, 204 font l'objet de quatrièmes pliages au niveau du connecteur 800, selon la figure 1. Cependant au niveau du connecteur, les lames 202, 204 peuvent se prolonger de façon rectiligne à partir de la platine, sans pliage.

Les pontets de liaison sécables reliant initialement les différentes lames 202, 204 sont prévus à l'extérieur du corps en matériau thermoplastique surmoulé de sorte que ces pontets puissent être rompus, par tout moyen classique approprié, par exemple des poinçons, après réalisation du corps surmoulé.

La réalisation, conforme à la présente invention, de contacts électriques de sortie d'un commutateur solidaires d'une platine offre notamment les avantages suivants par rapport aux dispositifs antérieurs connus :
- plus grande intégration,
- nombre de pièces en stock limitées,
- faisceaux de fils de liaison simplifiés en nombre et longueur,
- plus faible résistance de connexion entre les différents éléments portés par la platine,
- fiabilité améliorée,
- maintenance simplifiée,
- coût de fabrication réduit,
- assemblage plus rapide et simplifié.

Les commutateurs 300, 400 intégrés au boîtier 100 peuvent faire l'objet de nombreuses variantes connues de l'homme de l'art.

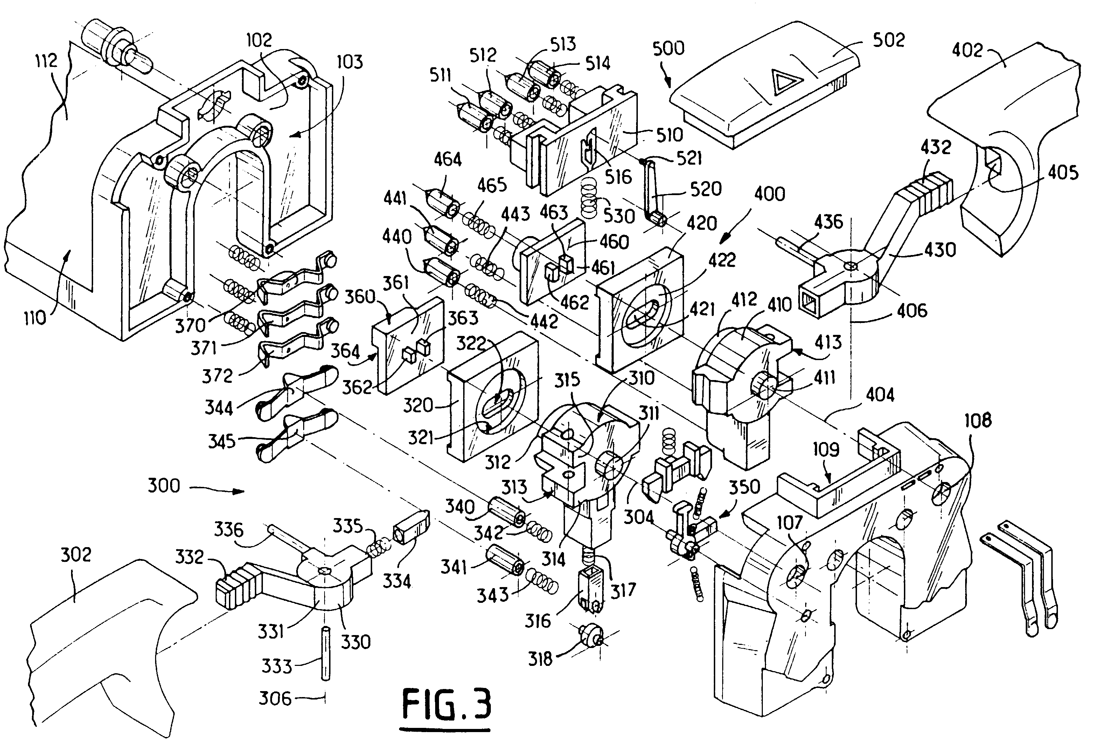

A titre d'exemple non limitatif, on va décrire par la suite les caractéristiques principales des commutateurs représentés sur la figure 3.

On notera tout d'abord que les extrémités 230, 240 des lames 202, 204 sont accessibles sur la face interne 103 de la coquille 102 du boîtier. Ces extrémités 230, 240 s'étendent perpendiculairement à la platine 110 comme indiqué précédemment. Toutefois, ces extrémités 230, 240 n'ont pas été représentées sur la figure 3, pour simplifier l'illustration.

On va maintenant décrire le commutateur 300.

Ce commutateur 300 comprend un porte-contact 310 réalisé de préférence en matériau électriquement isolant. Le porte-contact 310 est monté à rotation autour de l'axe 304 précité, sur le boîtier 100. Plus précisément, le porte-contact 310 est muni sur une face d'un tourillon 311 centré sur l'axe 304 et engagé dans un alésage complémentaire de guidage 107 ménagé dans la coquille 104 de boîtier. Le porte-contact 310 est muni sur une seconde face d'une structure ajourée 312 d'enveloppe cylindrique. Cette structure 312 est engagée dans un logement cylindrique complémentaire 321 ménagé dans une plaque support intermédiaire 320 portée par la coquille 102 de boîtier.

Le porte-contact 310 est également muni d'une structure de fourche 313. Les deux branches 314, 315 de la fourche s'étendent parallèlement à l'axe 304.

Une pièce d'entraînement 330 est placée entre la manette 302 et le porte-contact 310. Plus précisément, la pièce d'entraînement 330 comprend un corps central 331 muni d'un doigt 332 engagé à demeure dans un canal formé dans la manette 302. Ainsi, la pièce d'entraînement est liée étroitement à la manette 302. La pièce d'entraînement 330 est conçue pour être placée entre les deux branches 314, 315 de la fourche 313 de sorte que la manette 302, la pièce d'entraînement 330 et le porte-contact 310 soient liés mécaniquement lors d'une sollicitation à rotation autour de l'axe 304.

Ce mouvement de rotation autour de l'axe 304 est indexé à l'aide d'un plot 316 logé dans un canal formé sur le porte-contact 310. Ce canal s'étend perpendiculairement à l'axe 304. Le plot 316 est sollicité vers l'extérieur du canal précité par un ressort 317. Enfin, le plot 316 porte à son extrémité un galet 318 d'axe parallèle à l'axe 304 et qui se déplace sur une rampe d'indexation formée sur l'une des coquilles du boîtier.

Le porte-contact 310 porte en outre des moyens de commutation. Selon le mode de réalisation représenté sur la figure 3, il s'agit de deux plots 340, 341 logés dans des canaux respectifs formés dans le porte-contact 310 parallèlement à l'axe 304. Ces plots 340, 341 sont sollicités vers l'extérieur de leurs canaux respectifs par des ressorts 342, 343. Les plots 340, 341 sont ainsi sollicités contre des lames 344, 345 indépendantes et basculantes placées en regard d'extrémité associée 230 des lames 202, 204 comme représenté sur la figure 4. Une partie centrale des lames basculantes 344, 345 repose en permanence contre des extrémités 2300, 2301. Des premières extrémités des lames basculantes 344, 345 sont placées en regard d'extrémités associées 2302, 2303 des lames 202, 204. Les secondes extrémités des lames basculantes 344, 345 sont placées en regard d'extrémités associées 2304, 2305 des lames 202, 204.

Dans la position de repos du porte-contact 310 définie par l'indexage 316, 318, les lames basculantes 344, 345 sont séparées des extrémités 2302 à 2305.

Lors du pivotement de la manette 302 et du porte-contact 310 autour de l'axe 304 dans un premier sens, les plots 340, 341 provoquent le basculement des lames 344, 345 dans un premier sens pour déplacer ces dernières contre les extrémités associées 2302, 2303, des lames 202, 204 respectivement.

Lors du pivotement de la manette 302 et du porte-contact 310 autour de l'axe 304 dans un sens opposé, les plots 340, 341 provoquent le basculement des lames 344, 345 dans un deuxième sens opposé pour déplacer ces dernières contre les extrémités associées 2304, 2305, des lames 202, 204 respectivement.

Les lames basculantes 344, 345 peuvent ainsi être utilisées pour assurer la commande des indicateurs de changement de direction d'un véhicule automobile. Dans ce cas, le commutateur 300 est équipé de moyens de rappel automatique aptes à agir sur le porte-contact 310 pour rappeler celui-ci en position de repos. De tels moyens de rappel automatique sont représentés sous la référence 350 sur la figure 3. Ces moyens connus en soi, conçus pour interférer avec une came solidaire de l'arbre du volant, ne seront pas décrits en détail par la suite.

La pièce d'entraînement 330 est par ailleurs articulée sur le porte-contact 310 autour de l'axe 306 précité. Selon la figure 3 la pièce d'entraînement 330 est articulée sur le porte-contact 310, au niveau de la fourche 313, à l'aide d'un tourillon 333 coaxial à l'axe 306. La manette 302 et la pièce d'entraînement 330 sont ainsi susceptibles de pivotement autour de l'axe 306 par rapport au porte-contact 310. La manette 302 et la pièce d'entraînement 330 sont indexées lors de ce pivotement autour de l'axe 306 par un plot 334. Le plot 334 est placé dans un canal formé dans la pièce d'entraînement 330. Le plot 334 est sollicité vers l'extérieur de ce canal par un ressort 335. Le plot d'indexage 334 repose ainsi contre une rampe d'indexation prévue sur le porte-contact 310.

La pièce d'entraînement 330 est munie en outre d'un doigt d'entraînement 336. Ce dernier s'étend perpendiculairement à l'axe 306, en direction de la coquille arrière 102 du boîtier. Le doigt d'entraînement 336 traverse une lumière 322 ménagée dans la plaque support intermédiaire 320 transversalement à l'axe 306.

La pièce d'entraînement 330 est conçue pour entraîner un tiroir 360.

Le tiroir 360 est placé entre la coquille de boîtier 102 et la plaque support intermédiaire 320. Le tiroir 360 est ainsi guidé à translation par une glissière formée sur la plaque support intermédiaire 320, dans une direction générale orthogonale aux axes 304 et 306. Sur sa face avant 361, le tiroir 360 est muni de deux tétons 362, 363, formant une fourche, entre lesquels le doigt d'entraînement 336 est placé. Ainsi, le tiroir 360 est déplacé à translation lors du pivotement de la manette 302 et de la pièce d'entraînement 330 autour de l'axe 306.

Sur sa face arrière 364 le tiroir 360 est muni d'une pluralité de rampes formée en regard de lames basculantes ou élastiques 370, 371, 372. Ces dernières sont placées en regard d'extrémités 2306, 2307 des lames 202, 204, de sorte que le pivotement de la manette 302 et de la pièce d'entraînement 330 provoque un déplacement à translation du tiroir 360, qui lui-même induit un basculement des lames 370, 371, 372 et de là une modification de l'état de liaison électrique des extrémités 2306, 2307 des lames 202, 204.

Le second effet de commutation ainsi obtenu lors du pivotement de la manette 302 autour de l'axe 306 peut être utilisé par exemple pour commander un appel phare ou une inversion code-phare.

On va maintenant décrire le commutateur 400.

Toutefois, ce commutateur 400 ne sera pas décrit dans le détail, dans la mesure où il présente une grande similitude avec le commutateur 300 précité.

On retrouve sur la figure 3, pour le commutateur 400, un porte-contact 410, une pièce d'entraînement 430, une pièce support intermédiaire 420 et un tiroir 460.

Le porte-contact 410 est guidé à pivotement autour de l'axe 404 grâce à un tourillon 411 engagé dans un alésage 108 du boîtier et grâce à une structure ajourée 412 guidée dans un logement cylindrique 422 formé sur la pièce support intermédiaire 420. Le porte-contact 410 est indexé dans son pivotement autour de l'axe 404 par des moyens non représentés pour simplifier l'illustration. La pièce d'entraînement 430 est engagée par un doigt 432 dans un canal 405 ménagé dans la manette de commande 402. La pièce d'entraînement 430 est ainsi solidaire de la manette 402. La pièce d'entraînement 430 est engagée dans une fourchette 413 prévue sur le porte-contact 410. Ainsi, la manette 402, la pièce d'entraînement 430 et le porte-contact 410 sont liés lors d'une sollicitation à rotation de la manette 402 autour de l'axe 404.

Le porte-contact 410 reçoit au moins un plot de contact électriquement conducteur 440, de préférence deux plots de contact électriquement conducteurs 440, 441. Ceux-ci sont placés dans des canaux ménagés dans le porte-contact 410 parallèlement à l'axe 404. Les plots 440, 441 sont sollicités vers l'extérieur des canaux associés, plus précisément vers les extrémités 2400, 2401, 2402, 2403, 2404 et 2405 représentées sur la figure 4 des lames 402, 404 placées sur l'avant de la coquille 102, par des ressorts respectifs 442, 443. Ainsi, le déplacement à rotation de la manette de commande 402, de la pièce d'entraînement 430 et du porte-contact 410, autour de l'axe 404, entraînent un déplacement des plots 440, 441 et modifient l'état de liaison des lames 2400 à 2405. La commutation ainsi obtenue peut-être utilisée pour commander les fonctions lave/essuie vitres et glaces.

Le tiroir 460 est placé entre la plaque support intermédiaire 420 et la coquille 102. Il est guidé à translation par une glissière formée sur la plaque support 420, dans une direction perpendiculaire aux axes 404 et 406. Le tiroir 460 porte sur sa face avant 461 deux tétons 462, 463 en forme de fourche. La pièce d'entraînement 430 est par ailleurs articulée au niveau de la fourche 413, et autour de l'axe 406 sur le porte-contact 410. La pièce d'entraînement 430, et par conséquent la manette de commande 402, sont indexées dans ce pivotement autour de l'axe 406 à l'aide de moyens non représentés sur la figure 3 pour simplifier l'illustration.

La pièce d'entraînement 430 est munie d'un doigt 436 orthogonal à l'axe 406 et généralement parallèle à l'axe 404. Ce doigt 436 est engagé dans une lumière 421 traversante ménagée dans la pièce support 420 transversalement à l'axe 406. Le doigt 436 est ainsi placé dans la fourche 462, 463 formée sur la face avant du tiroir 460. Le tiroir 460 est alors déplacé à translation lors du pivotement de la manette de commande 402 et de la pièce d'entraînement 430 autour de l'axe 406. Le tiroir 460 porte au moins un plot de contact 464 sollicité par un ressort 465 contre des extrémités 2406 de lames 202, 204, pour modifier l'état de liaison de celles-ci. Ce deuxième effet de commutation obtenu lors du pivotement de la manette de commande 402 autour de l'axe 406 peut être utilisée pour compléter la commande des fonctions essui/lave vitres et glaces.

On va maintenant décrire un commutateur auxiliaire 500 prévu au niveau de l'âme 106 du boîtier 100 pour commander les indicateurs d'alarme ou "warning". Pour l'essentiel, ce commutateur auxiliaire 500 comprend un bouton poussoir de commande 502, et un tiroir de commutation 510.

Le tiroir de commutation 510 est guidé à translation perpendiculairement à l'axe 101 par des glissières 109 prévues sur la coquille avant 104 du boîtier. Il en est de même pour le bouton poussoir 502.

Le tiroir de commutation 510 porte différents plots de contact, quatre plots selon la représentation de la figure 3 sur laquelle ces derniers sont référencés 511, 512, 513 et 514. Les plots 511 à 514 sont sollicités par des ressorts associés contre des extrémités 2407, 2408, 2409 et 2410 des lames 202, 204. Le déplacement du tiroir 510 est contrôlé par un levier 520 possédant un doigt de contrôle 520 engagé dans une came 516 ménagée sur le tiroir 510. Un ressort 530 sollicite le tiroir de commutation 510 contre le bouton poussoir 502.

On va maintenant décrire un autre ensemble de commutation 700 intégré dans une manette de commande est représenté sur les figures 6 et 7.

On aperçoit sur ces figures 6 et 7, une manette, pouvant être la manette 302 ou la manette 402, équipée d'une bague de commande 702. Cette bague de commande 702 est guidée à rotation sur le corps de manette autour de l'axe longitudinal 701 de celle-ci.

Le corps de manette référencé 302 à titre d'exemple sur les figures 6 et 7 loge un manchon 710 en matériau électriquement isolant. Ce manchon 710 est immobilisé à rotation sur le corps 302 de manette par tous moyens appropriés, par exemple par des doigts 711 en saillie sur la surface extérieure du manchon 710 et engagés dans des logements complémentaires formés sur la surface interne du corps de manette. Le manchon 710 est muni sur sa surface interne 712 de lames de contact. Celles-ci sont formées de préférence de secteurs de cylindre. Plus précisément encore, le manchon 710 comprend de préférence sur sa surface interne 712 un réseau de paires de lames de contact en secteurs de cylindre, généralement diamétralement opposées. On voit ainsi sur la figure 7 deux lames diamétralement opposées 714, 715. D'autres lames similaires sont visibles sur la figure 6 sous les références 716, 717, 718 et 719.

Le manchon 710 loge par ailleurs un canon central 720.

Selon le mode de réalisation de la figure 6, la bague de commande 702 n'est pas placée en extrémité de la manette de commande 302, mais constitue une bague de commande intermédiaire, c'est-à-dire qu'elle est placée en retrait de l'extrémité de la manette 302. Les deux parties de manette référencées 3020, 3021 sur la figure 6, qui sont placées respectivement de part et d'autre de la bague 102 sont reliées par un axe central 730.

Le canon central 720 possède un canal central 721 cylindrique recevant l'axe 730. Ainsi, le canon 720 est guidé à rotation autour de l'axe 701 de la manette. Le canon central 720 est muni de plusieurs paires d'orifices borgnes radiaux, diamétralement opposés, et répartis sur sa longueur référencée 722. Ces orifices 722 logent chacun un plot de contact 724 en matériau électriquement conducteur. Les paires de plots électriquement conducteurs 724 sont sollicités vers l'extérieur du canon 720, soit vers la surface interne 712 du manchon fixe 710 et donc vers les lames 714 à 719 par des lames ressort 740. Ces lames ressort 740 ont la forme d'un arc hémicylindrique. Elles sont engagées par leurs extrémités, à l'aide de tous moyens classiques appropriés sur les plots 724. Les lames ressort 740 peuvent être engagées par leurs extrémités dans des orifices réalisés dans les plots 724. En variante, les lames ressort 740 peuvent être munies en extrémité de structures en fourche engagées sur les plots 724.

Le canon 720 est lié à rotation autour de l'axe 701 avec la bague 702 par tous moyens classiques appropriés. De préférence, l'extrémité avant 725 du canon 720 est munie de striures longitudinales engagées dans des stries complémentaires formées sur la bague 702.

Les lames ressort 740 sont de préférence réalisées en matériau électriquement conducteur pour relier électriquement les plots 724 associés diamétralement opposés.

L'homme de l'art comprendra aisément qu'ainsi l'entraînement à rotation de la bague 702 entraîne la rotation du canon 720 autour de l'axe 701 et permet de modifier l'état de liaison des lames 714 à 719 par l'intermédiaire des plots 724 et des lames ressorts 740. L'effet de commutation électrique ainsi obtenu peut être utilisé pour compléter les fonctions sélection d'éclairage et/ou de commande essuie/lave vitres et glaces selon la manette de commande concernée.

Bien entendu la présente invention n'est pas limitée au mode de réalisation particulier qui vient d'être décrit mais s'étend à toutes variantes conformes à son esprit.

Par exemple, on peut envisager, si nécessaire, d'assurer des liaisons électriques entre les deux réseaux de lames 202, 204 intégrés à la platine 110 en pliant à partir de l'un au moins des deux réseaux des languettes élastiques reposant sur des lames associées de l'autre réseau, avant de réaliser le surmoulage du corps en matériau thermoplastique 112.

On peut utiliser une platine 110 logeant un seul réseau de lames électriquement conductrice. On peut également prévoir un boîtier 100 comprenant un commutateur unique.

## Revendications

1. Ensemble de commutation électrique conçu pour être fixé sur la colonne de direction d'un véhicule automobile dans lequel les contacts électriques de sortie (230, 240) d'au moins un commutateur électrique (300, 400) sont solidaires d'une platine (110) qui porte au moins un organe électrique auxiliaire (600, 810) et au moins un connecteur (800) apte à connecter le commutateur électrique (300, 400) et l'organe électrique auxiliaire (600, 810) avec le circuit électrique du véhicule, caractérisé par le fait qu'il comprend un boîtier (100) en forme d'arche à deux branches (130, 140), apte à chevaucher la colonne de direction et venu de moulage avec ladite platine (110), chaque branche (130, 140) du boîtier portant des lames (202, 204, 2301-2307, 2401-2406) en matériau électriquement conducteur en liaison avec des lames de contact portées par la platine (110), au moins une coquille (104) fixée sur le boîtier (100) pour fermer celui-ci, des manettes (302, 402) montées à déplacement respectivement sur chaque branche (130, 140) du boîtier et des moyens de commande de commutation (300, 400) placés respectivement entre chaque branche (130, 140) du boîtier (100) et ladite coquille (104), adaptés pour être actionnés par une manette respective (302, 402) et modifier ainsi l'état de liaison des lames (202, 204, 2301-2307, 2401-2406) portées par les branches (130, 140) du boîtier (100).

2. Ensemble selon la revendication 1, caractérisé par le fait que la platine (110) comprend au moins un réseau (202, 204) de lames en matériau électriquement conducteur, sur lequel est surmoulé un corps en matériau électriquement isolant (112).

3. Ensemble selon l'une des revendications 1 ou 2, caractérisé par le fait que la platine (110) comprend deux réseaux (202, 204) de lames en matériau électriquement conducteur, disposés sur deux étages généralement parallèles, sur lesquels est surmoulé un corps en matériau électriquement isolant (112).

4. Ensemble selon l'une des revendications 1 à 3, caractérisé par le fait que les organes électriques auxiliaires portés par la platine sont choisis dans le groupe comprenant : des relais, des fusibles (810), et un bloc contact (600) piloté par une clef.

5. Ensemble selon l'une des revendications 1 à 4, caractérisé par le fait que les lames de contact (202, 204) intégrées à la platine (110) sont réalisées en cuivre ou laiton.

6. Ensemble selon l'une des revendications 1 à 5, caractérisé par le fait que les lames de contact (202, 204) intégrées à la platine (110) ont une épaisseur de l'ordre de 8/10mm.

7. Ensemble selon l'une des revendications 1 à 6, caractérisé par le fait que la platine (110) est réalisée par moulage en matériau thermoplastique.

8. Ensemble selon la revendication 7, caractérisé par le fait que le matériau thermoplastique formant le corps de la platine (110) est du polyamide 6.6.

9. Ensemble selon l'une des revendications 1 à 8, caractérisé par le fait que les lames (202, 204) intégrées à la platine (110) sont pliées avant surmoulage du corps (112) formant la platine (110).

10. Ensemble selon l'une des revendications 1 à 9, caractérisé par le fait que les différentes lames (202, 204) intégrées à la platine (110) sont reliées initialement, avant surmoulage du corps (112) formant la platine (110) par des pontets provisoires qui sont rompus après formation du corps surmoulé (112).

11. Ensemble selon l'une des revendications 1 à 10, caractérisé par le fait qu'une coquille (102) du boîtier est venue de moulage avec le corps (112) de la platine (110).

12. Ensemble selon l'une des revendications 1 à 11, caractérisé par le fait qu'un boîtier (602) d'un bloc de contact (600) piloté par une clef est venu de moulage avec le corps (112) de la platine (110).

13. Ensemble selon l'une des revendications 1 à 12, caractérisé par le fait que le corps du connecteur (800) est venu de moulage avec le corps (112) de la platine (110).

14. Ensemble selon l'une des revendications 1 à 13, caractérisé par le fait que la platine (110) est parallèle à l'axe (101) de la colonne de direction.

15. Ensemble selon l'une des revendications 1 à 14, caractérisé par le fait que des extrémités (2300 à 2307 et 2400 à 2410) des lames (202, 204) sont pliées sensiblement perpendiculairement à la platine (110) pour coopérer avec les moyens de commutation d'au moins un commutateur.

16. Ensemble selon l'une des revendications 1 à 15, caractérisé par le fait que des extrémités (260, 261 à 267) des lames (202, 204) sont pliées sensiblement perpendiculairement à la platine (110) pour coopérer avec un rotor conçu pour être entraîné à rotation par une c!ef.

17. Ensemble selon l'une des revendications 1 à 16, caractérisé par le fait que des extrémités de lames de contact sont pliées en dehors du plan de la platine (110) pour former des broches de connexion au niveau du connecteur (800).

18. Ensemble selon l'une des revendications 1 à 17, caractérisé par le fait que des languettes (280) sont pliées orthogonalement à partir de lames (202, 204) pour servir de broches de connexion pour des fusibles (810) ou relais.

19. Ensemble selon l'une des revendications 1 à 18, caractérisé par le fait qu'il comprend au moins un commutateur comportant :
- une manette de commande (302, 402),
- un porte-contact (310, 410) guidé à pivotement autour d'un premier axe (304, 404) et lié avec la manette de commande, lors d'une rotation de celle-ci autour du premier axe, pour assurer un premier effet de commutation électrique,
- des moyens (333) aptes à guider la manette de commande (302, 402), autour d'un deuxième axe (306, 406), sur le porte-contact (310, 410),
- un tiroir (360, 460) guidé à translation sur le boîtier pour être déplacé lors de la rotation de la manette de commande (302, 402) autour du deuxième axe pour assurer un deuxième effet de commutation électrique.

20. Ensemble selon l'une des revendications 1 à 19, caractérisé par le fait qu'il comprend une manette de commande (302) logeant un manchon fixe (710) muni de lames de contact (714, 715) en secteurs de cylindre, une bague de commande (702) guidée à rotation sur le corps de la manette, un canon (720) lié à rotation avec la bague de commande (702), au moins une paire de plots (724) supportés par le canon (720) et au moins une lame ressort (740) en matériau électriquement conducteur venant en prise avec la paire de plots (724) pour d'une part, solliciter ceux-ci contre les lames de contact (714, 715) en secteur de cylindre et d'autre part, relier électriquement celles-ci.

21. Ensemble selon la revendication 20, caractérisé par le fait que la lame ressort a la forme générale d'un secteur hémicylindrique.

## Patentansprüche

1. Elektrische Schaltanordnung, die so ausgebildet ist, daß sie an der Lenksäule eines Kraftfahrzeuges befestigt werden kann, und in der die elektrischen Ausgangskontakte (230, 240) wenigstens eines elektrischen Schalters (300, 400) an einer Platte (110) befestigt sind, die wenigstens ein elektrisches Hilfsbauteil (600, 810) und wenigstens einen Anschlußstecker (800) trägt, der den elektrischen Schalter (300, 400) und das elektrische Hilfsbauteil (600, 810) mit dem elektrischen Schaltkreis des Fahrzeuges verbinden kann, dadurch gekennzeichnet, daß sie ein Gehäuse (100) in Form eines Bogens mit zwei Armen (130, 140) umfaßt, das die Lenksäule übergreifen kann und zusammen mit der Platte (110) gegossen ist, wobei jeder Arm (130, 140) des Gehäuses streifenförmige Elemente (202, 2301-2307, 2401-2406) aus einem elektrisch leitenden Material trägt, die mit Kontaktstreifen in Verbindung stehen, die von der Platte (110) gehalten sind, wenigstens eine Schale (104) am Gehäuse (100) befestigt ist, um dieses zu schließen, Bedienungsgriffe (302, 402) jeweils beweglich an jedem Arm (130, 140) des Gehäuses angebracht sind und Einrichtungen (300, 400) zur Schaltsteuerung jeweils zwischen jedem Arm (130, 140) des Gehäuses (100) und der Schale (104) angeordnet sind und von einem Bedienungsgriff (302, 402) jeweils betätigbar sind, wodurch der Anschlußzustand der streifenförmigen Elemente (202, 204, 2301-2307, 2401-2406) geändert wird, die von den Armen (130, 140) des Gehäuses (100) gehalten sind.

2. Anordnung nach Anspruch 1, dadurch gekennzeichnet, daß die Platte (110) wenigstens ein Netzwerk (202, 204) von streifenförmigen Elementen aus einem elektrisch leitenden Material umfaßt, an das ein Körper (112) aus einem elektrisch isolierenden Material angegossen ist.

3. Anordnung nach einem der Ansprüche 1 oder 2, dadurch gekennzeichnet, daß die Platte (110) zwei Netzwerke (202, 204) von streifenförmigen Elementen aus einem elektrisch leitenden Material umfaßt, die in zwei im wesentlichen parallelen Etagen angeordnet sind und an die ein Körper (112) aus einem elektrisch isolierenden Material angegossen ist.

4. Anordnung nach einem der Ansprüche 1 bis 3, dadurch gekennzeichnet, daß die elektrischen Hilfsbauteile, die von der Platte gehalten sind, aus der Gruppe gewählt sind, die Relais, Schmelzsicherungen (810) und einen Kontaktblock (600) umfaßt, der von einer Taste geschaltet wird.

5. Anordnung nach einem der Ansprüche 1 bis 4, dadurch gekennzeichnet, daß die Kontaktstreifen (202, 204), die in einem Stück mit der Platte (110) ausgebildet sind, aus Kupfer oder Messing gebildet sind.

6. Anordnung nach einem der Ansprüche 1 bis 5, dadurch gekennzeichnet, daß die Kontaktstreifen (202, 204), die in einem Stück mit der Platte (110) ausgebildet sind, eine Stärke in der Größenordnung von 8/10 mm haben.

7. Anordnung nach einem der Ansprüche 1 bis 6, dadurch gekennzeichnet, daß die Platte (110) durch Gießen aus einem thermoplastischen Material gebildet ist.

8. Anordnung nach Anspruch 7, dadurch gekennzeichnet, daß das thermoplastische Material, das den Körper der Platte (110) bildet, Polyamid 6.6 ist.

9. Anordnung nach einem der Ansprüche 1 bis 8, dadurch gekennzeichnet, daß die Streifen (202, 204), die in einem Stück mit der Platte (110) ausgebildet sind, vor dem Angießen des Körpers (112) zur Bildung der Platte (110) gebogen wurden.

10. Anordnung nach einem der Ansprüche 1 bis 9, dadurch gekennzeichnet, daß die verschiedenen Streifen (202, 204), die in einem Stück mit der Platte (110) ausgebildet sind, am Anfang vor dem Angießen des Körpers (112) zur Bildung der Platte (110) durch provisorische Brücken miteinander verbunden sind, die nach der Bildung des angegossenen Körpers (112) gebrochen sind.

11. Anordnung nach einem der Ansprüche 1 bis 10, dadurch gekennzeichnet, daß die Schale (104) des Gehäuses zusammen mit dem Körper (112) der Platte (110) gegossen ist.

12. Anordnung nach einem der Ansprüche 1 bis 11, dadurch gekennzeichnet, daß das Gehäuse (602) des Kontaktblockes (600), der über eine Taste geschaltet wird, zusammen mit dem Körper (112) der Platte (110) gegossen ist.

13. Anordnung nach einem der Ansprüche 1 bis 12, dadurch gekennzeichnet, daß der Körper des Anschlußsteckers (800) zusammen mit dem Körper (112) der Platte (110) gegossen ist.

14. Anordnung nach einem der Ansprüche 1 bis 13, dadurch gekennzeichnet, daß die Platte (110) parallel zur Achse (101) der Lenksäule ist.

15. Anordnung nach einem der Ansprüche 1 bis 14, dadurch gekennzeichnet, daß die Enden (2300 bis 2307 und 2400 bis 2410) der Streifen (202, 204) im wesentlichen senkrecht zur Platte (110) gebogen sind, so daß sie mit den Schalteinrichtungen des wenigstens einen Schalters zusammenarbeiten.

16. Anordnung nach einem der Ansprüche 1 bis 15, dadurch gekennzeichnet, daß die Enden (260, 261 bis 267) der Streifen (202, 204) im wesentlichen senkrecht zur Platte (110) gebogen sind, so daß sie mit einem Rotor zusammenarbeiten, der so ausgebildet ist, daß er durch eine Taste gedreht werden kann.

17. Anordnung nach einem der Ansprüche 1 bis 16, dadurch gekennzeichnet, daß die Enden der Kontaktstreifen über die Ebene der Platte (110) hinaus gebogen sind, um Kontaktlamellen auf der Höhe des Anschlußsteckers (800) zu bilden.

18. Anordnung nach einem der Ansprüche 1 bis 17, dadurch gekennzeichnet, daß Zungen (280) senkrecht von den Streifen (202, 204) ausgehend umgebogen sind, die als Anschlußlamellen für die Schmelzsicherungen (810) oder die Relais dienen.

19. Anordnung nach einem der Ansprüche 1 bis 18, dadurch gekennzeichnet, daß sie wenigstens einen Schalter umfaßt, der
- einen Bedienungsgriff (302, 402),
- einen Kontaktträger (310, 410), der um einen erste Achse (304, 404) drehbar geführt ist und mit dem Bedienungsgriff verbunden ist, während dieser um die erste Achse gedreht wird, um einen ersten elektrischen Schalteffekt zu bewirken,
- Einrichtungen (332), die den Bedienungsgriff (302, 402) um eine zweite Achse (306, 406) am Kontaktträger (310, 410) führen können, und
- einen Schieber (360, 460) umfaßt, der translationsbeweglich am Gehäuse geführt ist, so daß er während der Drehung des Bedienungsgriffes (302, 402) um die zweite Achse versetzt werden kann und dadurch ein zweiter elektrischer Schalteffekt bewirkt werden kann.

20. Anordnung nach einem der Ansprüche 1 bis 19, dadurch gekennzeichnet, daß sie einen Bedienungsgriff (302), der eine feste Hülse (710) aufnimmt, die mit Kontaktstreifen (714, 715) in Form von Zylindersektoren versehen ist, einen Bedienungsring (702), der drehbar am Körper des Griffes geführt ist, einen Zylinder (720), der in Drehverbindung mit dem Bedienungsring (702) steht, wenigstens zwei Köpfe (724), die vom Zylinder (720) gehalten sind, und wenigstens eine Blattfeder (740) aus einem elektrisch leitenden Material aufweist, die mit den beiden Köpfen (724) in Eingriff kommt, um einerseits diese gegen die Kontaktstreifen (714, 715) aus Zylindersektoren vorzuspannen und andererseits diese elektrisch zu verbinden.

21. Anordnung nach Anspruch 20, dadurch gekennzeichnet, daß die Blattfeder die Form im wesentlichen eines halbzylindrischen Sektors hat.

## Claims

1. An electrical switch assembly designed to be fixed on the steering column of a motor vehicle and in which the electrical output contacts (230, 240) of at least one electrical switch (300, 400) are secured to a plate (110) which carries at least one auxiliary electrical component (600, 810) and at least one connector (800) suitable for connecting the electrical switch (300, 400) and the auxiliary electrical component (600, 810) to the electrical circuit of the vehicle, the assembly being characterized by the fact that it comprises an arch-shaped housing (100) having two branches (130, 140) suitable for placing astride the steering column and integrally molded with said plate (110), each branch (130, 140) of the housing carrying blades (202, 204, 2301-2307, 2401-2406) of electrically conductive material in connection with contact blades carried by the plate (110), at least one shell (104) fixed on the housing (100) to close it, respective handles (302, 402) moveably mounted on each of the branches (130, 140) of the housing, and switch-control means (300, 400) placed respectively between each branch (130, 140) of the housing (100) and said shell (104), adapted to be actuated by a respective handle (302, 402), and thereby modifying the connection state of the blades (202, 204, 2301-2307, 2401-2406) carried by the branches (130, 140) of the housing (100).

2. An assembly according to claim 1, characterized by the fact that the plate (110) includes at least one array (202, 204) of blades made of electrically conductive material and on which a body of electrically insulating material (112) is overmolded.

3. An assembly according to claim 1 or 2, characterized by the fact that the plate (110) has two arrays (202, 204) of blades of electrically conductive material organized in two generally parallel layers, and on which a body of electrically insulating material (112) is overmolded.

4. An assembly according to any one of claims 1 to 3, characterized by the fact that the auxiliary electrical components carried by the plate are selected from the group comprising: relays, fuses (810), and a contact block (600) controlled by a key.

5. An assembly according to any one of claims 1 to 4, characterized by the fact that the contact blades (202, 204) integrated with the plate (110) are made of copper or brass.

6. An assembly according to any one of claims 1 to 5, characterized by the fact that the contact blades (202, 204) integrated with the plate (110) are about 8/l0ths of a millimeter thick.

7. An assembly according to any one of claims 1 to 6, characterized by the fact that the plate (110) is made by molding a thermoplastic material.

8. An assembly according to claim 7, characterized by the fact that the thermoplastic material forming the body of the plate (110) is 6.6 polyamide.

9. An assembly according to any one of claims 1 to 8, characterized by the fact that the blades (202, 204) integrated with the plate (110) are folded prior to the body (112) forming the plate (110) being overmolded thereon.

10. An assembly according to any one of claims 1 to 9, characterized by the fact that the various blades (202, 204) integrated with the plate (110) are initially interconnected, prior to overmolding of the body (112) forming the plate (110) by temporary bridges which are broken after the overmolded body (112) has been formed.

11. An assembly according to any one of claims 1 to 10, characterized by the fact that a shell (102) of the housing is integrally molded with the body (112) of the plate (110).

12. An assembly according to any one of claims 1 to 11, characterized by the fact that a housing (602) of a contact block (600) controlled by a key is integrally molded with the body (112) of the plate (110).

13. An assembly according to any one of claims 1 to 12, characterized by the fact that the body of the connector (800) is integrally molded with the body (112) of the plate (110).

14. An assembly according to any one of claims 1 to 13, characterized by the fact that the plate (110) is parallel to the axis (101) of the steering column.

15. An assembly according to any one of claims 1 to 14, characterized by the fact that the ends (2300 to 2307 and 2400 to 2410) of the blades (202, 204) are folded substantially perpendicular to the plate (110) to co-operate with the switching means of at least one switch.

16. An assembly according to any one of claims 1 to 15, characterized by the fact that the ends (260, 261 to 267) of the blades (202, 204) are folded substantially perpendicularly to the plate (110) to co-operate with a rotor designed to be rotated by a key.

17. An assembly according to any one of claims 1 to 16, characterized by the fact that the ends of the contact blades are folded out from the plane of the plate (110) to form connection pins in the connector (800).

18. An assembly according to any one of claims 1 to 17, characterized by the fact that tongues (280) are folded orthogonally from the blades (202, 204) to serve as connection pins for fuses (810) or relays.

19. An assembly according to any one of claims 1 to 18, characterized by the fact that it includes at least one switch comprising:
a control handle (302, 402);
a contact carrier (310, 410) guided to pivot about a first axis (304, 404) and associated with the control handle during rotation thereof about the first axis to provide a first electrical switching effect;
means (333) suitable for guiding the control handle (302, 402) about a second axis (306, 406) on the contract carrier (310, 410); and
a slider (360, 460) guided in translation on the housing to be displaced during rotation of the control handle (302, 402) about the second axis to provide a second electrical switching effect.

20. An assembly according to any one of claims 1 to 19, characterized by the fact that it includes a control handle (302) housing a fixed sleeve (710) fitted with contact blades (714, 715) occupying cylindrical sectors, a control ring (702) guided to rotate on the body of the handle, a barrel (720) constrained to rotate with the control ring (702), at least one pair of studs (724) supported by the barrel (720), and at least one spring blade (740) of electrically conductive material engaging the pair of studs (724) firstly to urge them against the contact blades (714, 715) in the form of a cylindrical sector, and secondly to interconnect the studs electrically.

21. An assembly according to claim 20, characterized by the fact that the spring blade is generally in the form of a semi-cylindrical sector.
